# EUROPEAN PATENT SPECIFICATION

(11) **EP 3 466 719 B1**
(45) Date of publication and mention of the grant of the patent: **26.05.2021**
(21) Application number: 17802940.1
(22) Date of filing: 26.05.2017
(51) Int. Cl.: B60C 1/00, B60C 11/03, B60C 11/12, C08K 3/04, C08K 3/36, C08L 7/00, C08L 9/00, C08L 101/00

(54) **PNEUMATIC TIRE**
LUFTREIFEN
PNEUMATIQUE

(30) Priority: 27.05.2016 JP 2016106141
(43) Date of publication of application: 10.04.2019
(73) Proprietor: Bridgestone Corporation, Tokyo 104-8340 (JP)
(72) Inventor: HASHIMOTO Kento, Tokyo 104-8340 (JP); SAKURAI Hideyuki, Tokyo 104-8340 (JP)
(74) Representative: Oxley, Robin John George
(86) International application number: PCT/JP2017/019799
(87) International publication number: WO 2017/204354

(56) References cited:
- WO-A1-2015/079703
- WO-A1-2016/084370
- WO-A1-2016/157906
- JP-A- 2016 074 256

## Description

### TECHNICAL FIELD

The present invention relates to a pneumatic tire.

### BACKGROUND

From the standpoint of improving driving safety of automobiles, it is important to improve the steering stability of tires on dry and wet road surfaces. On the other hand, increased concern for environmental issues has led to a global movement towards regulating carbon dioxide emissions. While improving the steering stability on dry and wet road surfaces, tire development must now also take into consideration high fuel efficiency, and therefore tire rolling resistance.

In this regard, JP 2012-92179 A (patent literature (PTL) 1) proposes a rubber composition that can improve the dry gripping performance and wet gripping performance of a tire and increase fuel efficiency. This rubber composition includes a rubber component (A) including natural rubber and/or synthetic isoprene rubber, a resin composition (B) including a novolac-type resorcinol resin and a resol-type phenolic resin, and a thermoplastic resin (C) that is immiscible with the rubber component (A).

Furthermore, JP 2014-9324 A (PTL 2) proposes a rubber composition that can improve the braking performance of the tire on wet road surfaces and increase fuel efficiency. In this rubber composition, the temperature at the peak position of the tanδ temperature curve is within a specific range, tanδ at 0°C is 0.95 or higher, and tanδ at -5°C and tanδ at 5°C satisfy a specific relationship. Reference is also made to WO 2015/079703 A1 and JP 2016-074256 A.

Other tire rubber compositions are disclosed in EP 3225657 A and EP 3279011 A, which are both prior art according to Art. 54(3) EPC.

### SUMMARY

### (Technical Problem)

However, there is typically a trade-off between the steering stability and rolling resistance of a tire. For example, improving the steering stability on dry and wet road surfaces worsens the rolling resistance, whereas reducing the rolling resistance worsens the steering stability on dry and wet road surfaces.

Furthermore, the steering stability on dry and wet road surfaces cannot be greatly improved without worsening of the rolling resistance of the tire even when using the rubber compositions of PTL 1 and PTL 2.

To resolve this technical problem, the present invention provides a pneumatic tire that can greatly improve the steering stability on dry and wet road surfaces without worsening of the rolling resistance.

### (Solution to Problem)

The main features for resolving the above problem are as follows.

A pneumatic tire according to the present invention includes lug grooves and widthwise sipes on a surface of a tread, characterized in that:
a rubber composition used in the tread includes a rubber component (A) including 50 mass% or more of at least one type of isoprene-based rubber selected from the group consisting of natural rubber and synthetic isoprene rubber, a thermoplastic resin (B), and a filler (C) including 70 mass% or more of silica, the amount of the thermoplastic resin (B) is 5 to 40 parts by mass per 100 parts by mass of the rubber component (A), and in the rubber composition, tanδ at 0°C is 0.5 or less, the difference between tanδ at 30°C and tanδ at 60°C is 0.070 or less, and the storage modulus at a dynamic strain of 1% and 0°C is 20 MPa or less; and
a tread edge component ratio of the tread as defined by Expression (1) is 6.0 to 8.0;
Expression (1): tread edge component ratio = (sum of tire widthwise extending length of the lug grooves and tire widthwise extending length of the widthwise sipes on the surface of the tread, where the widthwise extending lengths are a projected length in the tire width direction)/(tire circumferential length, where the tire circumferential length is a length measured at the tire equatorial plane).

This pneumatic tire greatly improves the steering stability on dry and wet road surfaces without worsening of the rolling resistance.

In the present disclosure, a lug groove refers to a groove with a groove width (opening width to the tread surface) greater than 1.5 mm, whereas a widthwise sipe refers to a groove with a groove width (opening width to the tread surface) equal to or less than 1.5 mm. Both types of grooves extend in a direction other than the tire circumferential direction to form tread edges with respect to the tire circumferential direction.

Also, the tread surface in the present disclosure refers to the peripheral surface, over the entire circumference of the tire, that comes into contact with the road surface when a tire assembled with an applicable rim and filled to a prescribed internal pressure is rolled while having a load corresponding to the maximum load capability applied thereon.

The "applicable rim" refers to a standard rim of an applicable size, such as the Measuring Rim in the STANDARDS MANUAL of the European Tire and Rim Technological Organization (ETRTO) in Europe or the Design Rim in the YEAR BOOK of the Tire and Rim Association, Inc. (TRA) in the USA, that is described in industrial standards effective in the region where the tire is manufactured and used, such as the JATMA YEAR BOOK published by the Japan Automobile Tyre Manufacturers Association (JATMA) in Japan, the STANDARDS MANUAL of the ETRTO, and the YEAR BOOK of the TRA. The "prescribed internal pressure" represents the air pressure corresponding to the maximum load capability for each applicable size and ply rating prescribed by the aforementioned JATMA YEAR BOOK and the like. The "maximum load capability" represents the maximum mass, under the aforementioned standards, permitted to be loaded on the tire.

In the present disclosure, the tire widthwise extending length of a lug groove that extends on the tread surface refers to the projected length of the lug groove in the tire width direction. The tire widthwise extending length of a widthwise sipe that extends on the tread surface refers to the projected length of the widthwise sipe in the tire width direction.

In the present disclosure, the tire circumferential length refers to the circumferential length of the tread surface at the tire equatorial plane.

In the pneumatic tire, the difference between tanδ at 0°C and tanδ at 30°C is preferably 0.30 or less in the rubber composition. This can reduce the temperature dependence of the rolling resistance of the tire.

In the pneumatic tire, the difference between tanδ at 0°C and tanδ at 60°C is preferably 0.35 or less in the rubber composition. In this case as well, the temperature dependence of the rolling resistance of the tire can be reduced.

In a preferred example of the pneumatic tire, the rubber composition further includes 1 to 5 parts by mass of a softener (D) per 100 parts by mass of the rubber component (A). This can sufficiently ensure the rigidity of the tread while facilitating kneading of the rubber composition.

The softener (D) is preferably a mineral-derived or petroleum-derived softener. This further facilitates kneading of the rubber composition.

In another preferred example of the pneumatic tire, the amount of the silica in the rubber composition is 40 to 70 parts by mass per 100 parts by mass of the rubber component (A). This can further improve the steering stability of the tire on dry and wet road surfaces while reducing the rolling resistance of the tire.

In another preferred example of the pneumatic tire, the filler (C) further includes carbon black, and the amount of the carbon black is 1 to 10 parts by mass per 100 parts by mass of the rubber component (A). This further improves the steering stability of the tire on dry and wet road surfaces.

In another preferred example of the pneumatic tire, the thermoplastic resin (B) is one or more kinds of resins selected from the group consisting of Cs-based resins, C₉-based resins, C₅/C₉-based resins, dicyclopentadiene resins, rosin resins, alkyl phenolic resins, and terpene phenolic resins. In this case as well, the steering stability of the tire on dry and wet road surfaces is further improved.

In the tread of the pneumatic tire, an edge component ratio of a tread center portion defined by Expression (2) below is preferably higher than an edge component ratio of tread shoulder portions defined by Expression (3) below;
Expression (2): edge component ratio of tread center portion = (sum of tire widthwise extending length of the lug grooves and tire widthwise extending length of the widthwise sipes in the tread center portion)/(tire circumferential length), where the tread center portion is a central 1/2 range of the width of the tread surface in the tire width direction, centered on the tire equatorial plane;
Expression (3): edge component ratio of tread shoulder portions = (sum of tire widthwise extending length of the lug grooves and tire widthwise extending length of the widthwise sipes in the tread shoulder portions)/(tire circumferential length), where the tread shoulder portions are 1/4 ranges of the width of the tread surface in the tire width direction, located at either outer side of the tread center portion in the tire width direction.

This can greatly improve the steering stability of the tire on dry and wet road surfaces while suppressing wear of the tread shoulder portions.

Here, the tread center portion refers to the 1/2 portion of the tire tread surface located at the tire width direction center when the tread surface is divided into four even parts in the tire width direction along planes parallel to the equatorial plane. The tread shoulder portions refer to a pair of 1/4 portions of the tire tread surface located at the outer sides in the tire width direction when the tread surface is divided into four even parts in the tire width direction along planes parallel to the equatorial plane. Accordingly, the tread edge component ratio defined in Expression (1) is the sum of the edge component ratio of the tread center portion defined in Expression (2) and the edge component ratio of the tread shoulder portions defined in Expression (3).

### (Advantageous Effect)

The present invention can provide a pneumatic tire that can greatly improve the steering stability on dry and wet road surfaces without worsening of the rolling resistance.

### BRIEF DESCRIPTION OF THE DRAWINGS

In the accompanying drawings:
FIG. 1 is a partial developed view of a tread pattern of the pneumatic tire according to an embodiment of the present invention, and
FIG. 2 is a partial developed view of a tread pattern of a pneumatic tire in a Comparative Example.

### DETAILED DESCRIPTION

The pneumatic tire of the present invention is described below in detail with reference to embodiments thereof.

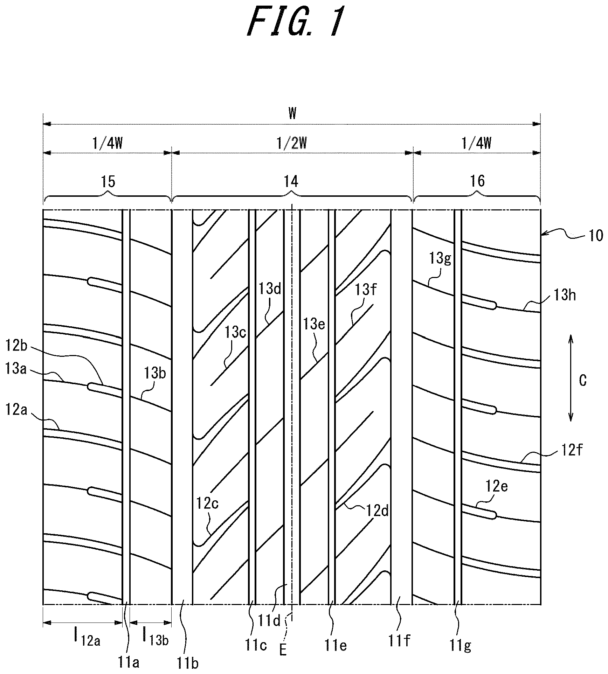

FIG. 1 is a partial developed view of a tread pattern of the pneumatic tire according to an embodiment of the present invention.

On the surface of a tread 10, the pneumatic tire in FIG. 1 includes circumferential grooves 11a, 11b, 11c, 11d, 11e, 11f, 11g extending continuously in the tire circumferential direction C and lug grooves 12a, 12b, 12c, 12d, 12e, 12f and widthwise sipes 13a, 13b, 13c, 13d, 13e, 13f, 13g, 13h extending at an inclination relative to the tire circumferential direction C. When the tread contacts the ground, the lug grooves 12a to 12f normally do not close, whereas the widthwise sipes 13a to 13h normally do close. Provision of an appropriate number of the lug grooves 12a to 12f and the widthwise sipes 13a to 13h in the tread 10 can increase the tread edge component ratio of the tire while ensuring the contact area with the contact patch of the tread 10. The "tread edge component ratio" in the present disclosure is an index representing the degree of tread edges with respect to the tire circumferential direction.

The lug grooves 12a to 12f and the widthwise sipes 13a to 13h that extend at an inclination relative to the tire circumferential direction C are preferably inclined from 30° to 85°, more preferably 40° to 85°, relative to the tire circumferential direction C.

In the present disclosure, the tire widthwise extending length of a lug groove refers to the projected length of the lug groove in the tire width direction, and the tire widthwise extending length of a widthwise sipe refers to the projected length of the widthwise sipe in the tire width direction, as described above. For example, on the tread 10 of the pneumatic tire illustrated in FIG. 1, the tire widthwise extending length of one lug groove 12a is a projected length l₁₂ₐ of the lug groove 12a in the tire width direction, and the tire widthwise extending length of one widthwise sipe 13b is a projected length l_{13b} of the widthwise sipe 13b in the tire width direction.

In the tread of the pneumatic tire according to the present invention, the tread edge component ratio defined by Expression (1), i.e. the sum of the tire widthwise extending length of the lug grooves and tire widthwise extending length of the widthwise sipes on the tread surface divided by the tire circumferential length (i.e. the circumferential length of the tread surface at the tire equatorial plane E), is 6.0 to 8.0. Deformation of the tread decreases and strain decreases when the tread edge component ratio defined by Expression (1) is less than 6.0. Consequently, the effects of the below-described rubber composition used in the tread are not sufficiently achieved, and the steering stability of the tire on dry and wet road surfaces cannot be sufficiently improved. On the other hand, the contact area with the contact patch of the land portions of the tread decreases when the tread edge component ratio defined by Expression (1) exceeds 8.0. In this case as well, the effects of the below-described rubber composition used in the tread are not sufficiently achieved, and the steering stability of the tire on dry and wet road surfaces cannot be sufficiently improved.

Here, the tread edge component ratio defined by Expression (1) is preferably in a range of 7.0 to 8.0 to further achieve the effects of the rubber composition used in the tread.

Similarly, the edge component ratio derived from the lug grooves (i.e., the sum of the tire widthwise extending length of the lug grooves on the tread surface divided by the tire circumferential length) is preferably in a range of 3.0 to 4.25, more preferably a range of 3.5 to 4.0, and the edge component ratio derived from the widthwise sipes (i.e. the sum of the tire widthwise extending length of the widthwise sipes on the tread surface divided by the tire circumferential length) is preferably in a range of 3.0 to 4.25, more preferably a range of 3.5 to 4.0, to further achieve the effects of the rubber composition used in the tread.

In the tread 10 of the pneumatic tire illustrated in FIG. 1, the edge component ratio of a tread center portion 14 as defined by Expression (2) above is preferably higher than the edge component ratio of tread shoulder portions 15, 16 as defined by Expression (3) above. The edge component ratio of the tread shoulder portions 15, 16 becomes relatively low, and the rigidity of the tread shoulder portions 15, 16 becomes relatively high, when the edge component ratio of the tread center portion 14 as defined by Expression (2) above is higher than the edge component ratio of the tread shoulder portions 15, 16 as defined by Expression (3) above. Consequently, the steering stability of the tire on dry and wet road surfaces can be greatly improved while suppressing wear of the tread shoulder portions 15, 16.

In the present disclosure, as described above, the tread center portion 14 refers to the 1/2 portion of the tire tread surface located at the tire width direction center when the tread surface is divided into four even parts in the tire width direction along planes parallel to the equatorial plane E. In other words, the tread center portion 14 is the central 1/2 range of the width (periphery width) W of the tread surface in the tire width direction, centered on the tire equatorial plane E (i.e. a 1/4 W range on either side of the tire equatorial plane E in the tire width direction). On the other hand, the tread shoulder portions 15, 16 refer to a pair of 1/4 portions of the tire tread surface located at the outer sides in the tire width direction when the tread surface is divided into four even parts in the tire width direction along planes parallel to the equatorial plane E. In other words, the tread shoulder portions 15, 16 are the 1/4 ranges of the width W of the tread surface in the tire width direction, located at either outer side of the tread center portion 14 in the tire width direction.

A rubber composition used in the tread 10 includes a rubber component (A) including 50 mass% or more of at least one type of isoprene-based rubber selected from the group consisting of natural rubber and synthetic isoprene rubber, a thermoplastic resin (B), and a filler (C) including 70 mass% or more of silica, and in the rubber composition, the amount of the thermoplastic resin (B) is 5 to 40 parts by mass per 100 parts by mass of the rubber component (A), tanδ at 0°C is 0.5 or less, the difference between tanδ at 30°C and tanδ at 60°C is 0.070 or less, and the storage modulus (E') at a dynamic strain of 1% and 0°C is 20 MPa or less.

Adding a prescribed amount of the thermoplastic resin (B) to the rubber composition can reduce the elastic modulus in a high strain region while suppressing a reduction of the elastic modulus in a low strain region. Therefore, applying this rubber composition to a tire tread can ensure rigidity of the tread in a portion far from the contact patch with the road surface, where strain is small during running, while increasing the deformation volume of the tread near the contact patch with the road surface, where strain is large during running.

Setting the content ratio of silica in the filler (C) that is added to the rubber composition to 70 mass% or more can suppress a rise in tanδ (loss tangent) and suppress worsening of the rolling resistance of a tire with a tread in which the rubber composition is applied.

The coefficient of friction (µ) on dry and wet road surfaces is proportional to the product of rigidity of the entire tread, the amount of deformation of the tread, and tanδ (loss tangent). Hence, even if a rise in tanδ is suppressed to control worsening of the rolling resistance in the pneumatic tire, in which the rubber composition is applied to the tread, the amount of deformation of the tread can be increased while ensuring rigidity of the entire tread, thereby sufficiently increasing the coefficient of friction (µ) on dry and wet road surfaces. This increase in the coefficient of friction (µ) on dry and wet road surfaces improves the steering stability on dry and wet road surfaces. In the tread of the pneumatic tire, the tread edge component ratio defined by Expression (1) is 6.0 to 8.0, deformation and strain of the tread are large, and the contact area with the tread contact patch is also large. Consequently, the effects of the rubber composition applied to the tread are sufficiently achieved.

The pneumatic tire of the present invention can therefore greatly improve the steering stability on dry and wet road surfaces while suppressing worsening of the rolling resistance.

In the rubber composition, tanδ at 0°C is 0.5 or less, preferably 0.45 or less, and even more preferably 0.4 or less to suppress worsening of the rolling resistance. While no lower limit is placed on tanδ at 0°C, tanδ at 0°C is normally 0.15 or more. The rolling resistance of the tire might worsen if tanδ at 0°C in the rubber composition exceeds 0.5.

In the rubber composition, tanδ at 30°C is preferably 0.4 or less, more preferably 0.35 or less, and is normally 0.1 or more. Furthermore, in the rubber composition, tanδ at 60°C is preferably 0.35 or less, more preferably 0.3 or less, and is normally 0.05 or more. These ranges can further suppress worsening of the rolling resistance of the tire.

To reduce the temperature dependence of the rolling resistance, the difference between tanδ at 30°C and tanδ at 60°C in the rubber composition is 0.070 or less, preferably 0.060 or less, more preferably 0.055 or less, and even more preferably 0.050 or less. No lower limit is placed on the difference between tanδ at 30°C and tanδ at 60°C, and this difference may be 0. If the difference between tanδ at 30°C and tanδ at 60°C in the rubber composition exceeds 0.070, the temperature dependence of the rolling resistance of the tire increases.

To reduce the temperature dependence of the rolling resistance, the difference between tanδ at 0°C and tanδ at 30°C in the rubber composition is preferably 0.30 or less, more preferably from 0.14 to 0.30, even more preferably 0.15 to 0.25, and particularly preferably 0.16 to 0.20.

To reduce the temperature dependence of the rolling resistance, the difference between tanδ at 0°C and tanδ at 60°C in the rubber composition is preferably 0.35 or less, more preferably 0.24 or less, and even more preferably 0.23 or less. This difference may also be 0.

From the standpoint of steering stability of the tire on wet road surfaces, the storage modulus (E') of the rubber composition at a dynamic strain of 1% and 0°C is 20 MPa or less, preferably 18 MPa or less, more preferably 16 MPa or less, and is preferably 3 MPa or more, more preferably 5 MPa or more. The rubber composition is highly flexible if the storage modulus at a dynamic strain of 1% and 0°C is 20 MPa or less. Applying this rubber composition to a tire tread can improve the grounding property of the tread, greatly improving the steering stability of the tire on dry and wet road surfaces.

From the standpoint of steering stability of the tire on dry and wet road surfaces, the tensile strength (Tb) of the rubber composition is preferably 20 MPa or more, more preferably 23 MPa or more. Using a rubber composition with a tensile strength of 20 MPa or more in the tread improves the rigidity of the tread overall and further improves the steering stability on dry and wet road surfaces.

The rubber component (A) of the rubber composition includes 50 mass% or more of at least one type of isoprene-based rubber selected from the group consisting of natural rubber and synthetic isoprene rubber, preferably 60 mass% or more, and more preferably 70 mass% or more. No upper limit is placed on the content ratio of the isoprene-based rubber in the rubber component (A), and the entire rubber component (A) may be isoprene-based rubber. When the content ratio of the isoprene-based rubber in the rubber component (A) is 50 mass% or more, a rise in the tanδ (loss tangent) of the rubber composition is suppressed. Applying this rubber composition to a tire tread can suppress worsening of the rolling resistance of the tire.

Other than natural rubber (NR) and synthetic isoprene rubber (IR), the rubber component (A) may include synthetic diene rubber such as polybutadiene rubber (BR), styrene-butadiene copolymer rubber (SBR), and styrene-isoprene copolymer rubber (SIR), or may include another synthetic rubber. One kind of these rubber components (A) may be used alone, or a blend of two or more kinds may be used.

The rubber composition includes the thermoplastic resin (B). Adding the thermoplastic resin (B) to the rubber composition can reduce the elastic modulus in a high strain region while suppressing a reduction of the elastic modulus in a low strain region. Therefore, applying the rubber composition that includes the thermoplastic resin (B) to a tire tread can ensure rigidity of the tread in a portion far from the contact patch with the road surface, where strain is small during running, while increasing the deformation volume of the tread near the contact patch with the road surface, where strain is large during running. Consequently, the friction coefficient (µ) at dry and wet road surfaces increases, which can improve the steering stability of the tire on dry and wet road surfaces.

The amount of the thermoplastic resin (B) is 5 to 40 parts by mass per 100 parts by mass of the rubber component (A), preferably 8 to 30 parts by mass, and more preferably 10 to 20 parts by mass. When the amount of the thermoplastic resin (B) is 5 parts by mass or more per 100 parts by mass of the rubber component (A), the elastic modulus of the rubber composition in the high strain region can be reduced, and when the amount is 40 parts by mass or less, a reduction of the elastic modulus of the rubber composition in the low strain region can be suppressed.

C₅-based resins, C₉-based resins, C₅/C₉-based resins, dicyclopentadiene resins, rosin resins, alkyl phenolic resins, and terpene phenolic resins are preferable as the thermoplastic resin (B) from the standpoint of steering stability of the tire on dry and wet road surfaces. One kind of these thermoplastic resins (B) may be used alone, or a combination of two or more kinds may be used.

The C₅-based resins refer to C₅-based synthetic petroleum resins. Examples of C₅-based resins include aliphatic petroleum resins obtained by using a Friedel-Crafts catalyst such as AlCl₃ or BF₃ to polymerize a C₅ fraction obtained by pyrolysis of naphtha in the petrochemical industry. The C₅ fraction usually includes an olefinic hydrocarbon such as 1-pentene, 2-pentene, 2-methyl-1-butene, 2-methyl-2-butene, or 3-methyl-1-butene, a diolefinic hydrocarbon such as 2-methyl-1,3-butadiene, 1,2-pentadiene, 1,3-pentadiene, or 3-methyl-1,2-butadiene, or the like. Commercial products may be used as the C₅-based resins, such as the "Escorez® 1000 series", which are aliphatic petroleum resins produced by ExxonMobil Chemical Company; "A100, B170, M100, R100" in the "Quintone® 100 series", which are aliphatic petroleum resins produced by Zeon Corporation; and the like.

The C₉-based resins are, for example, resins resulting from polymerization of an aromatic group that has 9 carbon atoms and has, as the principal monomers, vinyl toluene, alkyl styrene, and indene, which are C₉ fraction by-products produced along with petrochemical raw materials, such as ethylene or propylene, by pyrolysis of naphtha in the petrochemical industry. Specific examples of C₉ fractions obtained by pyrolysis of naphtha include vinyltoluene, α-methylstyrene, β-methylstyrene, y-methylstyrene, o-methylstyrene, p-methylstyrene, vinyltoluene, and indene. Along with a C₉ fraction, the C₉-based resin may use a C₈ fraction, such as styrene, a C₁₀ fraction, such as methylindene or 1,3-dimethylstyrene, and other substances such as naphthalene, vinylnaphthalene, vinylanthracene, or p-tert-butylstyrene as raw materials. These C₈-C₁₀ fractions and the like may simply be mixed or may be co-polymerized using a Friedel-Crafts catalyst, for example. The C₉-based resin may be a modified petroleum resin modified by a compound including a hydroxyl group, an unsaturated carboxylic acid compound, or the like. Commercial products may be used as the C₉-based resins. Examples of an unmodified C₉-based petroleum resin include "Neopolymer L-90", "Neopolymer 120", "Neopolymer 130", and "Neopolymer 140" (produced by JX Nippon Oil & Energy Corporation), and the like.

The C₅/C₉-based resins refer to C₅/C₉-based synthetic petroleum resins. Examples of C₅/C₉-based resins include a solid polymer obtained by polymerizing a petroleum-derived C₅ to C₁₁ fraction using a Friedel-Crafts catalyst such as AlCl₃ or BF₃. Specific examples include copolymers having, as main components, styrene, vinyltoluene, α-methylstyrene, indene, and the like. As the C₅/C₉-based resins, resins with little C₉ or higher component are preferable in terms of compatibility with the rubber component (A). Here, including "little C₉ or higher component" means that the amount of C₉ or higher component in the total amount of the resin is less than 50 mass%, preferably 40 mass% or less. Commercial products may be used as the C₅/C₉-based resins. Examples include "Quintone® G100B" (produced by Zeon Corporation) and "ECR213" (produced by ExxonMobil Chemical Company).

The dicyclopentadiene resin is a petroleum resin manufactured using dicyclopentadiene, which is obtainable by dimerization of cyclopentadiene, as the main raw material. Commercial products may be used as the dicyclopentadiene resin. Examples include "1105, 1325, 1340" in the "Quintone® 1000 series", which are alicyclic petroleum resins produced by Zeon Corporation.

The rosin resins are natural resins that are the residue remaining after gathering a balsam such as rosin, which is the sap of a pinaceae plant, and distilling turpentine. The rosin resins have rosin acid (abietic acid, palustric acid, isopimaric acid, etc.) as the main component. The rosin resins may also be modified resins or hydrogenated resins produced by modifying, hydrogenating, etc. these natural resins. Examples include natural resin rosin, and polymerized rosins and partially hydrogenated rosins thereof; glycerin ester rosin, and partially hydrogenated rosins, completely hydrogenated rosins, and polymerized rosins thereof; and pentaerythritol ester rosin, and partially hydrogenated rosins and polymerized rosins thereof. Examples of natural resin rosins include gum rosin, tall oil rosin, and wood rosin included in raw rosin or tall oil. Commercial products may be used as the rosin resin. Examples include "Neotall 105" (produced by Harima Chemicals Group, Inc.), "SN-Tack 754" (produced by San Nopco Ltd.), "Lime Resin No. 1", "Pensel A" and "Pensel AD" (produced by Arakawa Chemical Industries, Ltd.), "Polypale" and "Pentalyn C" (produced by Eastman Chemical Co.), and "Highrosin® S" (produced by Taishamatsu Essential Oil Co., Ltd.).

The alkyl phenolic resin may, for example, be obtained by a condensation reaction of an alkylphenol with formaldehyde in the presence of a catalyst. Commercial products may be used as the alkyl phenolic resin. Examples include "Hitanol 1502P" (produced by Hitachi Chemical Co., Ltd.), "Tackirol 201" (produced by Taoka Chemical Co., Ltd.), "Tackirol 250-1" (a brominated alkylphenol formaldehyde resin produced by Taoka Chemical Co., Ltd.), "Tackirol 250-III" (a brominated alkylphenol formaldehyde resin produced by Taoka Chemical Co., Ltd.), "R7521P", "SP1068", "R7510PJ", "R7572P" and "R7578P" (produced by Schenectady Chemicals, Inc.), and "R7510PJ" (produced by SI GROUP INC).

The terpene phenolic resin may, for example, be obtained by reacting terpenes and various phenols using a Friedel-Crafts catalyst or by further condensing the resultant with formalin. While the terpenes used as raw material are not restricted, a monoterpene hydrocarbon such as α-pinene or limonene is preferable, a terpene including α-pinene is more preferable, and α-pinene itself is particularly preferable. Commercial products may be used as the terpene phenolic resin. Examples include "Tamanol 803L" and "Tamanol 901" (produced by Arakawa Chemical Industries, Ltd.), and "YS Polyster U" series, "YS Polyster T" series, "YS Polyster S" series, "YS Polyster G" series, "YS Polyster N" series, "YS Polyster K" series, and "YS Polyster TH" series (produced by Yasuhara Chemical Co., Ltd.).

The rubber composition includes the filler (C). The filler (C) includes 70 mass% or more of silica, preferably 80 mass% or more, and more preferably 90 mass% or more. No upper limit is placed on the ratio of silica in the filler (C), and the entire filler (C) may be silica. When the ratio of silica in the filler (C) is 70 mass% or higher, then tanδ of the rubber composition can be reduced, and worsening of the rolling resistance of the tire to which the rubber composition is applied can be suppressed.

Any type of silica may be used. Examples include wet silica (hydrous silicate), dry silica (anhydrous silicate), calcium silicate, and aluminum silicate. Among these, wet silica is preferred. One kind of these silicas may be used alone, or two or more kinds may be used in combination.

The amount of the silica in the rubber composition is preferably in a range of 40 to 70 parts by mass per 100 parts by mass of the rubber component (A), more preferably a range of 45 to 60 parts by mass. When the amount of the silica is 40 parts by mass or more per 100 parts by mass of the rubber component (A), tanδ of the rubber composition can be lowered, and the rolling resistance of a tire to which the rubber composition is applied can be reduced. When the amount of the silica is 70 parts by mass or less, the rubber composition is highly flexible. Applying this rubber composition to tread rubber of a tire increases the deformation volume of the tread rubber, allowing further improvement in the steering stability of the tire on dry and wet road surfaces.

In the rubber composition, the filler (C) preferably further includes carbon black. The amount of the carbon black is preferably in a range of 1 to 10 parts by mass per 100 parts by mass of the rubber component (A), more preferably a range of 3 to 8 parts by mass. Adding 1 part by mass or more of the carbon black can improve the rigidity of the rubber composition, and adding 10 parts by mass or less can suppress a rise in tanδ. Hence, applying this rubber composition to the tread rubber of a tire can further improve the steering stability on dry and wet road surfaces while suppressing worsening of the rolling resistance of the tire.

The carbon black is not restricted. Examples include GPF, FEF, HAF, ISAF, and SAF grade carbon black. Among these, ISAF and SAF grade carbon black are preferable for improving the steering stability of the tire on dry and wet road surfaces. One kind of these carbon blacks may be used alone, or two or more kinds may be used in combination.

In addition to the above-described silica and carbon black, the filler (C) may also include aluminum hydroxide, alumina, clay, calcium carbonate, or the like.

The amount of the filler (C) in the rubber composition is preferably 30 to 100 parts by mass, more preferably 40 to 80 parts by mass, per 100 parts by mass of the rubber component (A). When the amount of the filler (C) in the rubber composition is within the aforementioned ranges, then applying the rubber composition to a tire tread can further improve the steering stability on dry and wet road surfaces while reducing the rolling resistance of the tire.

From the standpoint of processability and operability, the rubber composition can further include a softener (D). The amount of the softener (D) is preferably in a range of 1 to 5 parts by mass per 100 parts by mass of the rubber component (A), more preferably a range of 1.5 to 3 parts by mass. Adding 1 part by mass or more of the softener (D) facilitates kneading of the rubber composition, whereas adding 5 parts by mass or less of the softener (D) can suppress a reduction in the rigidity of the tread.

Examples of the softener (D) include mineral-derived oil, petroleum-derived aromatic oil, paraffin oil, naphthene oil, and palm oil derived from natural products. Among these, a mineral-derived softener and a petroleum-derived softener are preferred from the standpoint of steering stability of the tire on dry and wet road surfaces.

To improve the effect of adding silica, a silane coupling agent is preferably added to the rubber composition. Any silane coupling agent may be added. Examples include bis(3-triethoxysilylpropyl) tetrasulfide, bis(3-triethoxysilylpropyl) trisulfide, bis(3-triethoxysilylpropyl) disulfide, bis(2-triethoxysilylethyl) tetrasulfide, bis(3 -trimethoxysilylpropyl) tetrasulfide, bis(2-trimethoxysilylethyl) tetrasulfide,
3-mercaptopropyltrimethoxysilane, 3-mercaptopropyltriethoxysilane, 2-mercaptoethyltrimethoxysilane, 2-mercaptoethyltriethoxysilane, 3-trimethoxysilylpropyl-N,N-dimethylthiocarbamoyl tetrasulfide, 3-triethoxysilylpropyl-N,N-dimethylthiocarbamoyl tetrasulfide, 2-triethoxysilylethyl-N,N-dimethylthiocarbamoyl tetrasulfide, 3-trimethoxysilylpropyl benzothiazolyl tetrasulfide, 3-triethoxysilylpropyl benzothiazolyl tetrasulfide, 3-triethoxysilylpropyl methacrylate monosulfide, 3-trimethoxysilylpropyl methacrylate monosulfide,
bis(3-diethoxymethylsilylpropyl) tetrasulfide,
3-mercaptopropyldimethoxymethylsilane,
dimethoxymethylsilylpropyl-N,N-dimethylthiocarbamoyl tetrasulfide, and dimethoxymethylsilylpropyl benzothiazolyl tetrasulfide. One kind of these silane coupling agents may be used alone, or two or more kinds may be used in combination.

The amount of the silane coupling agent is preferably in a range of 2 to 20 parts by mass per 100 parts by mass of the silica, more preferably a range of 5 to 15 parts by mass. When the amount of the silane coupling agent is 2 parts by mass or more per 100 parts by mass of the silica, the effect of adding the silica is sufficiently improved. When the amount of the silane coupling agent is 20 parts by mass or less per 100 parts by mass of the silica, gelation of the rubber component (A) is unlikely.

The rubber composition preferably further includes a fatty acid metal salt. Examples of the metal useable in the fatty acid metal salt include Zn, K, Ca, Na, Mg, Co, Ni, Ba, Fe, Al, Cu, and Mn, with Zn being preferable. Examples of the fatty acid usable in the fatty acid metal salt include fatty acids having a saturated or unsaturated linear, branched, or cyclic structure with 4 to 30 carbon atoms, or mixtures thereof. Among these, saturated or unsaturated linear fatty acids having 10 to 22 carbon atoms are preferable. Examples of saturated linear fatty acids having 10 to 22 carbon atoms include lauric acid, myristic acid, palmitic acid, and stearic acid. Examples of unsaturated linear fatty acids having 10 to 22 carbon atoms include oleic acid, linoleic acid, linolenic acid, and arachidonic acid. One kind of fatty acid metal salt may be used alone, or a combination of two or more kinds may be used.

The amount of the fatty acid metal salt is preferably in a range of 0.1 to 10 parts by mass per 100 parts by mass of the rubber component (A), more preferably a range of 0.5 to 5 parts by mass.

In addition to the rubber component (A), the thermoplastic resin (B), the filler (C), the softener (D), the silane coupling agent, and the fatty acid metal salt, the rubber composition may also include compounding agents typically used in the rubber industry. For example, stearic acid, an age resistor, zinc oxide (zinc white), a vulcanization accelerator, a vulcanizing agent, or the like may be appropriately selected and added in a range that does not impede the object of the present invention. Commercially available products may be suitably used as these additives. However, to reduce the storage modulus (E') of the rubber composition at a dynamic strain of 1% and 0°C, a thermosetting resin such as a novolac-type or resol-type phenolic resin, a resorcin resin, or the like is preferably not added.

The rubber composition is preferably produced through a process of kneading the following, excluding a vulcanization compounding agent that includes a vulcanizing agent and a vulcanization accelerator, at 150°C to 165°C: a rubber component (A) that contains 50 mass% or more of at least one type of isoprene-based rubber selected from the group consisting of natural rubber and synthetic isoprene rubber, a thermoplastic resin (B), and a filler (C) including 70 mass% or more of the silica.

Kneading at 150°C to 165°C while excluding the vulcanization compounding agent can disperse compounding agents other than the vulcanization compounding agent in the rubber component (A) uniformly while avoiding premature vulcanization (scorching). This allows the effects of each compounding agent to be sufficiently achieved and can reduce the difference between tanδ at 30°C and tanδ at 60°C while reducing tanδ at 0°C in the rubber composition. The value of tanδ of the rubber composition, the difference between tanδ at various temperatures, the storage modulus (E'), and the tensile strength (Tb) can be changed by adjusting not only the above-described kneading temperature, but also the type and blend ratio of the rubber component (A), the type and amount of the thermoplastic resin (B), the silica content in the filler (C), the type of silica, and the like, and also the type and amount of other compounding agents.

During production of the rubber composition, kneading may be performed again at a different temperature lower than 150°C after kneading at 150°C to 165°C as described above.

During production of the rubber composition, a vulcanization compounding agent that includes a vulcanizing agent and a vulcanization accelerator is preferably added after the compounding agents other than the vulcanization compounding agent are sufficiently dispersed in the rubber component (A). Kneading is then preferably performed at a temperature that can prevent premature vulcanization (scorching), such as 90°C to 120°C.

The kneading time during kneading at each temperature during production of the rubber composition is not restricted and may be set appropriately considering factors such as the size of the kneading device, the volume of the raw material, and the type and state of the raw material.

Examples of the vulcanizing agent include sulfur.

The amount of the vulcanizing agent is preferably in a range of 0.1 to 10 parts by mass as sulfur per 100 parts by mass of the rubber component (A), more preferably a range of 1 to 4 parts by mass. When the amount of the vulcanizing agent is 0.1 parts by mass or more as sulfur, the fracture strength, wear resistance, and the like of the vulcanized rubber can be ensured. When this amount is 10 parts by mass or less, the rubber elasticity can be sufficiently ensured. In particular, setting the amount of the vulcanizing agent to 4 parts by mass or less as sulfur can further improve the steering stability of the tire on dry and wet road surfaces.

Any vulcanization accelerator may be used. Examples include a thiazole type vulcanization accelerator such as 2-mercaptobenzothiazole (M), dibenzothiazolyl disulfide (DM), N-cyclohexyl-2-benzothiazolyl sulfenamide (CZ), and N-tert-butyl-2-benzothiazolyl sulfenamide (NS); and a guanidine type vulcanization accelerator such as 1,3-diphenyl guanidine (DPG). The rubber composition preferably includes three types of vulcanization accelerators.

The amount of the vulcanization accelerator is preferably in a range of 0.1 to 5 parts by mass per 100 parts by mass of the rubber component (A), more preferably a range of 0.2 to 3 parts by mass.

The rubber composition may be produced using a Banbury mixer, a roll, or the like, for example, to blend and knead the above-described components, i.e. the rubber component (A), the thermoplastic resin (B), the filler (C), and any compounding agents selected as necessary, and then subjecting the result to processes such as warming and extrusion.

In accordance with the type of applicable tire, the pneumatic tire of the present invention may be obtained by first molding a tire using an unvulcanized rubber composition and then vulcanizing the tire, or by first molding a tire using semi-vulcanized rubber yielded by a preliminary vulcanization process and then fully vulcanizing the tire. The members other than the tread in the pneumatic tire of the present invention are not restricted, and widely-known members may be used. The pneumatic tire of the present invention may be filled with ordinary air or air with an adjusted partial pressure of oxygen, or the pneumatic tire may be filled with an inert gas such as nitrogen, argon, or helium.

### EXAMPLES

The present invention is described below in detail with reference to Examples. However, the present invention is no way limited to the following Examples.

### <Preparation and Measurement of Properties of Rubber Composition>

Rubber compositions with the formulations listed in Table 1 were prepared, and the loss tangent (tanδ), storage modulus (E'), and tensile strength (Tb) of the resulting rubber compositions were measured with the following methods. Table 1 lists the results.

### (1) Loss tangent (tanδ) and storage modulus (E')

The loss tangent (tanδ) at 0°C, 30°C, and 60°C and the storage modulus (E') at 0°C of vulcanized rubber obtained by vulcanizing the rubber compositions at 145°C for 33 minutes were measured under the conditions of an initial strain of 2%, a dynamic strain of 1%, and a frequency of 52 Hz, using a spectrometer produced by Ueshima Seisakusho Co., Ltd.

### (2) Tensile strength (Tb)

The tensile strength (Tb) of vulcanized rubber obtained by vulcanizing the rubber composition at 145°C for 33 minutes was measured in accordance with JIS K6251-1993.

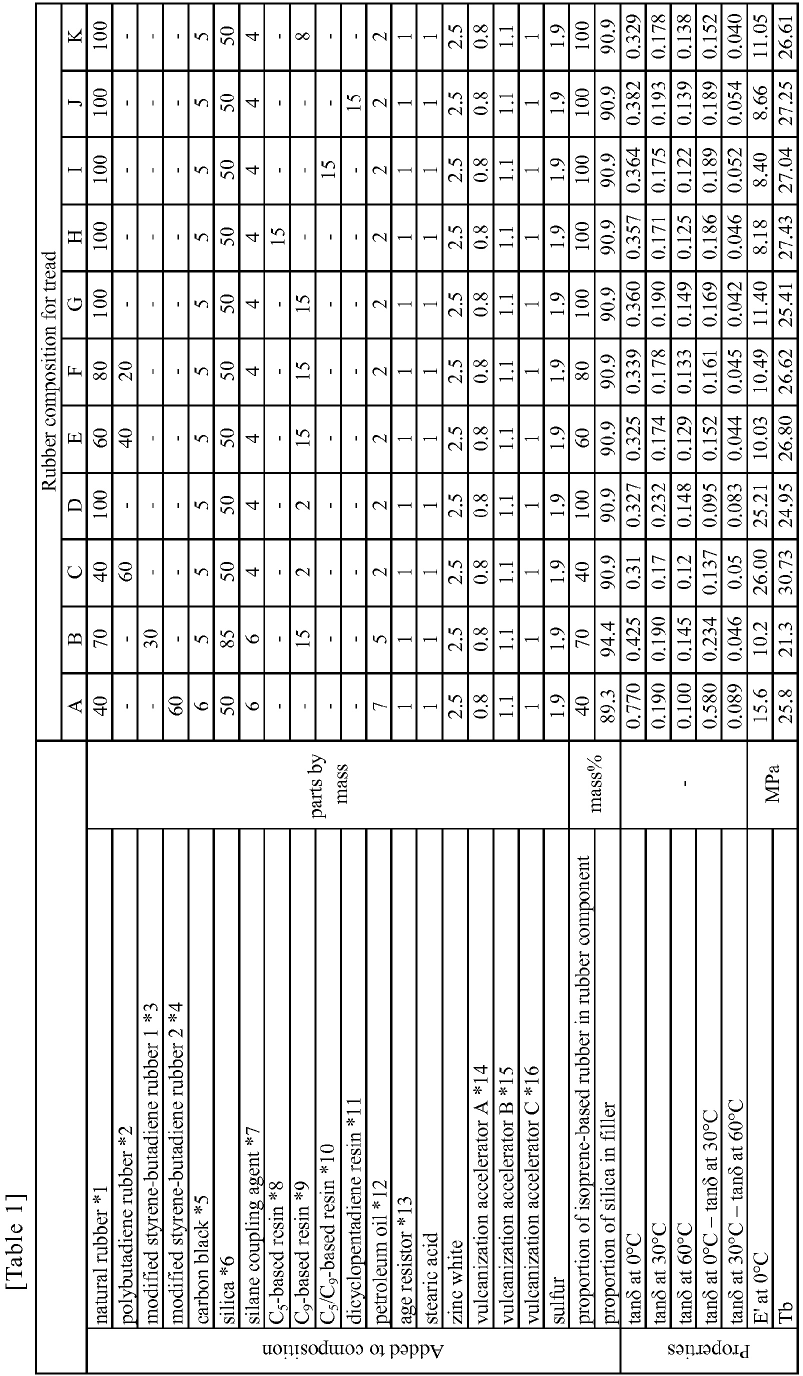

*1: natural rubber: "SIR20" produced in Indonesia
*2: polybutadiene rubber: "BR01" produced by JSR Corporation
*3: modified styrene-butadiene rubber 1: modified SBR1 synthesized by the method below
*4: modified styrene-butadiene rubber 2: modified SBR2 synthesized by the method below
*5: carbon black: N234 (ISAF), "#78" produced by Asahi Carbon Co., Ltd.
*6: silica: "Nipsil AQ" produced by Tosoh Silica Corporation
*7: silane coupling agent: bis(3-triethoxysilylpropyl) disulfide, (average sulfur chain length: 2.35), "Si75"® produced by Evonik
*8 C₅-based resin: "Escorez® 1102B" produced by ExxonMobil Chemical Company
*9 C₉-based resin: "Nisseki Neopolymer® 140" produced by JX Nippon Oil & Energy Corporation
*10 C₅/C₉-based resin: "Quintone® G100B" produced by Zeon Corporation
*11 dicyclopentadiene resin: "Quintone® 1105" produced by Zeon Corporation
*12 petroleum oil: "Process X-140" produced by Japan Energy Corporation
*13 age resistor:
   N-(1,3-dimethylbutyl)-N'-phenyl-p-phenylenediamine, "Nocrac 6C" produced by Ouchi Shinko Chemical Industrial Co., Ltd.
*14 vulcanization accelerator A: 1,3-diphenyl guanidine, "Soxinol® D-G" produced by Sumitomo Chemical Co., Ltd.
*15 vulcanization accelerator B: dibenzothiazolyl disulfide, "Nocceler® DM-P" produced by Ouchi Shinko Chemical Industrial Co., Ltd.
*16 vulcanization accelerator C: N-cyclohexyl-2-benzothiazolyl sulfenamide, "Nocceler® CZ-G" produced by Ouchi Shinko Chemical Industrial Co., Ltd.

### <Modified Styrene-Butadiene Rubber 1>

In an 800 mL pressure-resistant glass vessel that had been dried and purged with nitrogen, a cyclohexane solution of 1,3-butadiene and a cyclohexane solution of styrene were added to yield 67.5 g of 1,3-butadiene and 7.5 g of styrene. Then, 0.6 mmol of 2,2-ditetrahydrofurylpropane was added, and 0.8 mmol of n-butyllithium was added. Subsequently, the mixture was polymerized for 1.5 hours at 50°C. Next, 0.72 mmol of N,N-bis(trimethylsilyl)-3-[diethoxy(methyl)silyl] propylamine was added as a modifying agent to the polymerization reaction system when the polymerization conversion ratio reached nearly 100%, and a denaturation reaction was carried out for 30 minutes at 50°C. Subsequently, the reaction was stopped by adding 2 mL of an isopropanol solution containing 5 mass% of 2,6-di-t-butyl-p-cresol (BHT), and the result was dried with an ordinary method to obtain the modified styrene-butadiene rubber 1 (modified SBR 1). Measurement of the microstructure of the resulting modified SBR 1 revealed a bound styrene content of 10 mass%, a vinyl bond content of the butadiene portion of 40%, and a peak molecular weight of 200,000.

### <Modified Styrene-Butadiene Rubber 2>

### Apart from using

N-(1,3-dimethylbutylidene)-3-triethoxysilyl-1-propanamine instead of the N,N-bis(trimethylsilyl)-3-[diethoxy(methyl)silyl] propylamine as the modifying agent, a polymerization reaction and denaturation reaction were carried out in the same way as for the modified SBR 1 to obtain the modified styrene-butadiene rubber 2 (modified SBR 2). Measurement of the microstructure of the resulting modified SBR 2 revealed a bound styrene content of 10 mass%, a vinyl bond content of the butadiene portion of 40%, and a peak molecular weight of 200,000.

### <Production and Evaluation of Tires>

The rubber compositions obtained as described above were used in treads to produce pneumatic radial tires for passenger vehicles with a size of 195/65R15. The rolling resistance and the steering stability on dry and wet road surfaces were evaluated for the tires using the methods below.

In Table 2 and Table 3, the edge component ratio derived from the lug grooves is the sum of the tire widthwise extending length of the lug grooves on the tread surface divided by the tire circumferential length, and the edge component ratio derived from the widthwise sipes is the sum of the tire widthwise extending length of the widthwise sipes on the tread surface divided by the tire circumferential length. These values are listed for each of the entire tread, the tread center portion, and the tread shoulder portions.

The tire tread pattern of Example 1 and Comparative Example 2 in Table 2 and the Examples and Comparative Examples in Table 3 was as illustrated in FIG. 1.

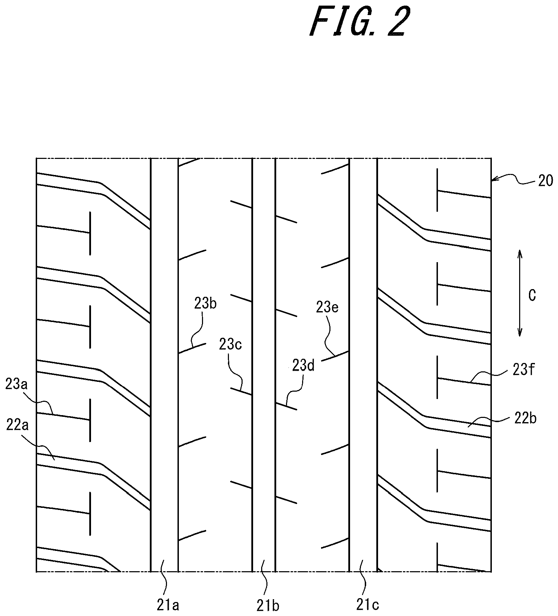

On the other hand, the tire tread pattern of Comparative Example 1 and Comparative Example 3 in Table 2 was as illustrated in FIG. 2. The tread 20 of the pneumatic tire in FIG. 2 has circumferential grooves 21a, 21b, 21c extending continuously in the tire circumferential direction C and lug grooves 22a, 22b and widthwise sipes 23a, 23b, 23c, 23d, 23e, 23f extending at an inclination relative to the tire circumferential direction C. The tread edge component ratio in the tread 20, however, is less than 6.0.

The tire tread pattern of the tire of Examples 2 and 3 and Comparative Example 4 in Table 2 was similar to that of FIG. 1, except that the density of lug grooves and sipes was changed to adjust the edge component ratio.

### (3) Rolling Resistance

Sample tires were rotated at a speed of 80 km/hr in a rotating drum under a load of 4.82 kN, and the rolling resistance was measured. The results are listed as index values, with the rolling resistance of the tire of Comparative Example 1 as 100. A smaller index value represents lower rolling resistance.

### (4) Steering Stability on Dry and Wet Road Surfaces

The sample tires were mounted on a test car, and the steering stability on dry and wet road surfaces was represented as a feeling score by the driver. The results are listed as index values, with the feeling score of the tire of Comparative Example 1 as 100. A larger index value represents better steering stability.

**[Table 2]**

| | | | Comparative Example 1 | Comparative Example 2 | Comparative Example 3 | Example 1 | Example 2 | Example 3 | Comparative Example 4 |
|---|---|---|---|---|---|---|---|---|---|
| Type of rubber composition | | | A | A | B | B | B | B | B |
| Overall tread | edge component ratio derived from lug grooves | - | 2.89 | 3.78 | 2.89 | 3.78 | 3.02 | 3.91 | 4.01 |
| | edge component ratio derived from widthwise sipes | - | 2.88 | 3.86 | 2.88 | 3.86 | 3.08 | 3.99 | 4.09 |
| | edge component ratio of overall tread | - | 5.77 | 7.64 | 5.77 | 7.64 | 6.1 | 7.9 | 8.1 |
| Tread center portion | edge component ratio derived from lug grooves | - | 0 | 1.05 | 0 | 1.05 | 0.84 | 1.09 | 1.11 |
| | edge component ratio derived from widthwise sipes | - | 1.39 | 1.19 | 1.39 | 1.19 | 0.95 | 1.23 | 1.26 |
| | edge component ratio of tread center portion | - | 1.39 | 2.24 | 1.39 | 2.24 | 1.79 | 2.31 | 2.37 |
| Tread shoulder portions | edge component ratio derived from lug grooves | - | 2.89 | 2.73 | 2.89 | 2.73 | 2.18 | 2.82 | 2.89 |
| | edge component ratio derived from widthwise sipes | - | 1.49 | 2.67 | 1.49 | 2.67 | 2.13 | 2.76 | 2.83 |
| | edge component ratio of tread shoulder portions | - | 4.38 | 5.40 | 4.38 | 5.40 | 4.31 | 5.58 | 5.72 |
| Evaluation | rolling resistance | index | 100 | 100 | 100 | 100 | 100 | 100 | 100 |
| | steering stability on dry road surface | index | 100 | 100 | 105 | 110 | 107 | 104 | 100 |
| | steering stability on wet road surface | index | 100 | 100 | 100 | 110 | 105 | 107 | 105 |

**[Table 3]**

| | | | Comparative Example 5 | Comparative Example 6 | Example 4 | Example 5 | Example 6 | Example 7 | Example 8 | Example 9 | Example 10 |
|---|---|---|---|---|---|---|---|---|---|---|---|
| Type of rubber composition | | | C | D | E | F | G | H | I | J | K |
| Overall tread | edge component ratio derived from lug grooves | - | 3.78 | 3.78 | 3.78 | 3.78 | 3.78 | 3.78 | 3.78 | 3.78 | 3.78 |
| | edge component ratio derived from widthwise sipes | - | 3.86 | 3.86 | 3.86 | 3.86 | 3.86 | 3.86 | 3.86 | 3.86 | 3.86 |
| | edge component ratio of overall tread | - | 7.64 | 7.64 | 7.64 | 7.64 | 7.64 | 7.64 | 7.64 | 7.64 | 7.64 |
| Tread center portion | edge component ratio derived from lug grooves | - | 1.05 | 1.05 | 1.05 | 1.05 | 1.05 | 1.05 | 1.05 | 1.05 | 1.05 |
| | edge component ratio derived from widthwise sipes | - | 1.19 | 1.19 | 1.19 | 1.19 | 1.19 | 1.19 | 1.19 | 1.19 | 1.19 |
| | edge component ratio of tread center portion | - | 2.24 | 2.24 | 2.24 | 2.24 | 2.24 | 2.24 | 2.24 | 2.24 | 2.24 |
| Tread shoulder portions | edge component ratio derived from lug grooves | - | 2.73 | 2.73 | 2.73 | 2.73 | 2.73 | 2.73 | 2.73 | 2.73 | 2.73 |
| | edge component ratio derived from widthwise sipes | - | 2.67 | 2.67 | 2.67 | 2.67 | 2.67 | 2.67 | 2.67 | 2.67 | 2.67 |
| | edge component ratio of tread shoulder portions | - | 5.40 | 5.40 | 5.40 | 5.40 | 5.40 | 5.40 | 5.40 | 5.40 | 5.40 |
| Evaluation | rolling resistance | index | 102 | 95 | 103 | 103 | 101 | 102 | 102 | 99 | 100 |
| | steering stability on dry road surface | index | 103 | 103 | 109 | 110 | 110 | 106 | 107 | 108 | 110 |
| | steering stability on wet road surface | index | 90 | 92 | 100 | 102 | 104 | 104 | 104 | 105 | 102 |

As is clear from Table 2 and Table 3, the pneumatic tires of the Examples can greatly improve the steering stability on dry and wet road surfaces without worsening of the rolling resistance.

### INDUSTRIAL APPLICABILITY

The present invention can provide a pneumatic tire that can greatly improve the steering stability on dry and wet road surfaces without worsening of the rolling resistance. This tire can be used on various types of vehicles.

### REFERENCE SIGNS LIST

10, 20: Tread
11a, 11b, 11c, 11d, 11e, 11f, 11g, 21a, 21b, 21c: Circumferential groove
12a, 12b, 12c, 12d, 12e, 12f, 22a, 22b: Lug groove
13a, 13b, 13c, 13d, 13e, 13f, 13g, 13h, 23a, 23b, 23c, 23d, 23e, 23f: Widthwise sipe
14: Tread center portion
15, 16: Tread shoulder portion
C: Tire circumferential direction
E: Tire equatorial plane
W: Width of tread surface in tire width direction
l₁₂ₐ: Tire widthwise extending length of lug groove 12a (projected length of lug groove 12a in tire width direction)
l_{13b}: Tire widthwise extending length of widthwise sipe 13b (projected length of widthwise sipe 13b in tire width direction)

## Claims

1. A pneumatic tire comprising lug grooves (12a, 12b, 12c, 12d, 12e, 12f) and widthwise sipes (13a, 13b, 13c, 13d, 13e, 13f, 13g, 13h) on a surface of a tread (10), **characterized in that**:
a rubber composition used in the tread comprises a rubber component (A) including 50 mass% or more of at least one type of isoprene-based rubber selected from the group consisting of natural rubber and synthetic isoprene rubber, a thermoplastic resin (B), and a filler (C) including 70 mass% or more of silica, an amount of the thermoplastic resin (B) is 5 to 40 parts by mass per 100 parts by mass of the rubber component (A), and in the rubber composition, tanδ at 0°C is 0.5 or less, a difference between tanδ at 30°C and tanδ at 60°C is 0.070 or less, and a storage modulus at a dynamic strain of 1% and 0°C is 20 MPa or less; wherein the loss tangent tanδ at 0°C, 30°C, and 60°C and the storage modulus at 0°C are measured under the conditions of an initial strain of 2%, a dynamic strain of 1%, and a frequency of 52 Hz; and
a tread edge component ratio of the tread (10) as defined by Expression (1) is 6.0 to 8.0;
Expression (1): tread edge component ratio = (sum of tire widthwise extending length of the lug grooves (12a, 12b, 12c, 12d, 12e, 12f) and tire widthwise extending length of the widthwise sipes (13a, 13b, 13c, 13d, 13e, 13f, 13g, 13h) on the surface of the tread (10), where the widthwise extending lengths are a projected length in the tire width direction)/(tire circumferential length, where the tire circumferential length is a length measured at the tire equatorial plane (E)).

2. The pneumatic tire of claim 1, wherein a difference between tanδ at 0°C and tanδ at 30°C is 0.30 or less in the rubber composition.

3. The pneumatic tire of claim 1 or 2, wherein a difference between tanδ at 0°C and tanδ at 60°C is 0.35 or less in the rubber composition.

4. The pneumatic tire of any one of claims 1 to 3, wherein the rubber composition further includes 1 to 5 parts by mass of a softener (D) per 100 parts by mass of the rubber component (A).

5. The pneumatic tire of claim 4, wherein the softener (D) is a mineral-derived or petroleum-derived softener.

6. The pneumatic tire of any one of claims 1 to 5, wherein an amount of the silica in the rubber composition is 40 to 70 parts by mass per 100 parts by mass of the rubber component (A).

7. The pneumatic tire of any one of claims 1 to 6, wherein the filler (C) further includes carbon black, and an amount of the carbon black is 1 to 10 parts by mass per 100 parts by mass of the rubber component (A).

8. The pneumatic tire of any one of claims 1 to 7, wherein the thermoplastic resin (B) is one or more kinds of resins selected from the group consisting of Cs-based resins, C₉-based resins, C₅/C₉-based resins, dicyclopentadiene resins, rosin resins, alkyl phenolic resins, and terpene phenolic resins.

9. The pneumatic tire of any one of claims 1 to 8, wherein
in the tread (10), an edge component ratio of a tread center portion (14) defined by Expression (2) is higher than an edge component ratio of tread shoulder portions (15, 16) defined by Expression (3);
Expression (2): edge component ratio of tread center portion (14) = (sum of tire widthwise extending length of the lug grooves (12c, 12d) and tire widthwise extending length of the widthwise sipes (13c, 13d, 13e, 13f) in the tread center portion (14))/(tire circumferential length), where the tread center portion (14) is a central 1/2 range of the width (W) of the tread surface in the tire width direction, centered on the tire equatorial plane (E);
Expression (3): edge component ratio of tread shoulder portions (15, 16) = (sum of tire widthwise extending length of the lug grooves (12a, 12b, 12e, 12f) and tire widthwise extending length of the widthwise sipes (13a, 13b, 13g, 13h) in the tread shoulder portions (15, 16))/(tire circumferential length), where the tread shoulder portions (15, 16) are 1/4 ranges of the width (W) of the tread surface in the tire width direction, located at either outer side of the tread center portion (14) in the tire width direction.

## Patentansprüche

1. Luftreifen, der Stollenrillen (12a, 12b, 12c, 12d, 12e, 12f) und Querlamellen (13a, 13b, 13c, 13d, 13e, 13f, 13g, 13h) auf einer Oberfläche einer Lauffläche (10) umfasst, **dadurch gekennzeichnet, dass**:
eine in der Lauffläche verwendete Kautschukzusammensetzung einen Kautschukbestandteil (A) umfasst, der 50 Gew-% oder mehr mindestens einer Art von Kautschuk auf Isoprengrundlage einschließt, ausgewählt aus der Gruppe, die aus Naturkautschuk und synthetischem Isoprenkautschuk besteht, ein thermoplastisches Harz (B) und einen Füllstoff (C), der 70 Gew-% oder mehr an Siliziumdioxid einschließt, wobei eine Menge des thermoplastischen Harzes (B) 5 bis 40 Masseanteile auf 100 Masseanteile des Kautschukbestandteils (A) beträgt und in der Kautschukzusammensetzung tanδ bei 0 °C 0,5 oder weniger beträgt, eine Differenz zwischen tanδ bei 30 °C und tanδ bei 60 °C 0,070 oder weniger beträgt und ein Speichermodul bei einer dynamischen Dehnung von 1 % und 0 °C 20 MPa oder weniger beträgt, wobei der Verlustfaktor tanδ bei 0 °C, 30 °C und 60 °C und der Speichermodul bei 0 °C unter den Bedingungen einer anfänglichen Dehnung von 2 %, einer dynamischen Dehnung von 1 % und einer Frequenz von 52 Hz gemessen werden,
ein Laufflächen-Randbestandteilsverhältnis der Lauffläche (10), wie durch den Ausdruck (1) definiert, 6,0 bis 8,0 beträgt,
Ausdruck (1): Laufflächen-Randbestandteilsverhältnis = (Summe der sich in Reifenbreitenrichtung erstreckenden Länge der Stollenrillen (12a, 12b, 12c, 12d, 12e, 12f) und der sich in Reifenbreitenrichtung erstreckenden Länge der Querlamellen (13a, 13b, 13c, 13d, 13e, 13f, 13g, 13h) auf der Oberfläche der Lauffläche (10), wobei die sich in Reifenbreitenrichtung erstreckenden Längen eine projizierte Länge in der Reifenbreitenrichtung sind)/(Reifenumfangslänge, wobei die Reifenumfangslänge eine Länge, gemessen an der Reifenäquatorialebene (E), ist).

2. Luftreifen nach Anspruch 1, wobei in der Kautschukzusammensetzung eine Differenz zwischen tanδ bei 0 °C und tanδ bei 30 °C 0,30 oder weniger beträgt.

3. Luftreifen nach Anspruch 1 oder 2, wobei in der Kautschukzusammensetzung eine Differenz zwischen tanδ bei 0 °C und tanδ bei 60 °C 0,35 oder weniger beträgt.

4. Luftreifen nach einem der Ansprüche 1 bis 3, wobei die Kautschukzusammensetzung ferner 1 bis 5 Masseanteile eines Weichmachers (D) auf 100 Masseanteile des Kautschukbestandteils (A) einschließt.

5. Luftreifen nach Anspruch 4, wobei der Weichmacher (D) ein aus einem Mineral gewonnener oder aus Erdöl gewonnener Weichmacher ist.

6. Luftreifen nach einem der Ansprüche 1 bis 5, wobei ein Anteil des Siliziumdioxids in der Kautschukzusammensetzung 40 bis 70 Masseanteile auf 100 Masseanteile des Kautschukbestandteils (A) beträgt.

7. Luftreifen nach einem der Ansprüche 1 bis 6, wobei der Füllstoff (C) ferner Ruß einschließt und eine Menge des Rußes 1 bis 10 Masseanteile auf 100 Masseanteile des Kautschukbestandteils (A) beträgt.

8. Luftreifen nach einem der Ansprüche 1 bis 7, wobei das thermoplastische Harz (B) eine oder mehrere Arten von Harz ist, ausgewählt aus der Gruppe, die aus Harzen auf Cs-Grundlage, Harzen auf C₉-Grundlage, Harzen auf C₅/C₉-Grundlage, Dicyclopentadien-Harzen, Kolophoniumharzen, Alkylphenol-Harzen und Terpenphenol-Harzen besteht.

9. Luftreifen nach einem der Ansprüche 1 bis 8, wobei
in der Lauffläche (10), ein Randbestandteilsverhältnis eines Laufflächen-Mittelabschnitts (14), wie durch den Ausdruck (2) definiert, höher ist als ein Randbestandteilsverhältnis von Laufflächen-Schulterabschnitten (15, 16), wie durch den Ausdruck (3) definiert,
Ausdruck (2): Randbestandteilsverhältnis des Laufflächen-Mittelabschnitts (14) = (Summe der sich in Reifenbreitenrichtung erstreckenden Länge der Stollenrillen (12c, 12d) und der sich in Reifenbreitenrichtung erstreckenden Länge der Querlamellen (13c, 13d, 13e, 13f) in dem Laufflächen-Mittelabschnitt (14)/(Reifenumfangslänge), wobei der Laufflächen-Mittelabschnitt (14) ein mittiger 1/2-Bereich der Breite (W) der Laufflächen-Oberfläche in der Reifenbreitenrichtung, zentriert auf der Reifenäquatorialebene (E), ist,
Ausdruck (3): Randbestandteilsverhältnis der Laufflächen-Schulterabschnitte (15, 16) = (Summe der sich in Reifenbreitenrichtung erstreckenden Länge der Stollenrillen (12a, 12b, 12e, 12f) und der sich in Reifenbreitenrichtung erstreckenden Länge der Querlamellen (13a, 13b, 13g, 13h) in den Laufflächen-Schulterabschnitten (15, 16)/(Reifenumfangslänge), wobei die Laufflächen-Schulterabschnitte (15, 16) 1/4-Bereiche der Breite (W) der Laufflächen-Oberfläche in der Reifenbreitenrichtung sind, die auf beiden äußeren Seiten des Laufflächen-Mittelabschnitts (14) in der Reifenbreitenrichtung angeordnet sind.

## Revendications

1. Bandage pneumatique, comprenant des rainures à barrettes (12a, 12b, 12c, 12d, 12e, 12f) et des lamelles dans le sens de la largeur (13a, 13b, 13c, 13d, 13e, 13f, 13g, 13h) sur une surface d'une bande de roulement (10), **caractérisé en ce que** :
une composition de caoutchouc utilisée dans la bande de roulement comprend un composant de caoutchouc (A) incluant 50% en poids ou plus d'au moins un type de caoutchouc à base d'isoprène sélectionné dans le groupe constitué de caoutchouc naturel et de caoutchouc isoprène synthétique, une résine thermoplastique (B) et une charge (C) incluant 70% en poids ou plus de silice, une quantité de la résine thermoplastique (B) représentant 5 à 40 parties en poids pour 100 parties du composant de caoutchouc (A), et dans le composant de caoutchouc, tanδ à 0°C correspond à 0,5 ou moins, une différence entre tanδ à 30°C et tanδ à 60°C correspondant à 0,070 ou moins, et un module de conservation en présence d'une contrainte dynamique de 1% et de 0°C correspondant à 20 MPa ou moins ; dans lequel la tangente de pertes tanδ à 0°C, à 30°C et à 60°C et le module de conservation à 0°C sont mesurées dans des conditions d'une contrainte initiale de 2%, d'une contrainte dynamique de 1% et d'une fréquence de 52 Hz ; et
un rapport d'un composant de bordure de bande de roulement de la bande de roulement (10) come défini par l'expression (1) représente 6,0 à 8,0 ;
expression (1) : rapport du composant de bordure de la bande de roulement = (somme de la longueur d'extension, dans le sens de la largeur du bandage pneumatique, des rainures à barrettes (12a, 12b, 12c, 12d, 12e, 12f) et de la longueur d'extension, dans le sens de la largeur du bandage pneumatique, des lamelles dans le sens de la largeur (13a, 13b, 13c, 13d, 13e, 13f, 13g, 13h) sur la surface de la bande de roulement (10), les longueurs d'extension dans le sens de la longueur représentent une longueur projetée dans la direction de la largeur du bandage pneumatique)/(longueur circonférentielle du bandage pneumatique, la longueur circonférentielle du bandage pneumatique étant une longueur mesurée au niveau du plan équatorial du bandage pneumatique (E)).

2. Bandage pneumatique selon la revendication 1, dans lequel une différence entre tanδ à 0°C et tanδ à 30°C correspond à 0,30 ou moins dans la composition de caoutchouc.

3. Bandage pneumatique selon la revendication 1 ou 2, dans lequel une différence entre tanδ à 0°C et tanδ à 60°C correspond à 0,35 ou moins dans la composition de caoutchouc.

4. Bandage pneumatique selon l'une quelconque des revendications 1 à 3, dans lequel la composition de caoutchouc inclut en outre 1 à 5 parties en poids d'un plastifiant (D) pour 100 parties en poids du composant de caoutchouc (A).

5. Bandage pneumatique selon la revendication 4, dans lequel le plastifiant (D) est un plastifiant dérivé de minéraux ou dérivé de pétrole.

6. Bandage pneumatique selon l'une quelconque des revendications 1 à 5, dans lequel une quantité de silice dans la composition de caoutchouc représente 40 à 70 parties en poids pour 100 parties en poids du composant de caoutchouc (A).

7. Bandage pneumatique selon l'une quelconque des revendications 1 à 6, dans lequel la charge (C) inclut en outre du noir de carbone, et une quantité du noir de carbone représente 1 à 10 parties en poids pour 100 parties en poids du composant de caoutchouc (A).

8. Bandage pneumatique selon l'une quelconque des revendications 1 à 7, dans lequel la résine thermoplastique (B) représente un ou plusieurs types de résine sélectionnés dans le groupe constitué de résines à base de Cs, de résines à base de C₉, de résines à base de C₅/C₉, de résines de dicyclopentadiène, de résines de colophane, de résines phénoliques d'alkyle et de résines phénoliques de terpène.

9. Bandage pneumatique selon l'une quelconque des revendications 1 à 8, dans lequel :
dans la bande de roulement (10), un rapport du composant de bordure d'une partie centrale (14) défini par l'expression (2) est supérieur à un rapport du composant de bordure des parties d'épaulement de la bande de roulement (15, 16) défini par l'expression (3) ;
expression (2) : rapport du composant de bordure de la partie centrale de la bande de roulement (14) = (somme de la longueur d'extension, dans le sens de la largeur du bandage pneumatique, des rainures à barrettes (12c, 12d) et de la longueur d'extension, dans le sens de la largeur du bandage pneumatique, des lamelles dans le sens de la largeur (13c, 13d, 13e, 13f) dans la partie centrale de la bande de roulement (14)/(longueur circonférentielle du bandage pneumatique), la partie centrale de la bande de roulement (14) représentent une plage d'une moitié de la largeur (W) de la surface de la bande de roulement dans la direction de la largeur du bandage pneumatique, centrée sur le plan équatorial du bandage pneumatique (E) ;
expression (3) : rapport du composant de bordure des parties d'épaulement de la bande de roulement (15, 16) = (somme de la longueur d'extension, dans le sens de la largeur du bandage pneumatique, des rainures à barrettes (12a, 12b, 12c, 12e, 12f) et de la longueur d'extension, dans le sens de la largeur du bandage pneumatique, des lamelles dans le sens de la largeur (13a, 13b, 13g, 13h) dans les parties d'épaulement de la bande de roulement (15, 16)/longueur circonférentielle du bandage pneumatique), les parties d'épaulement de la bande de roulement (15, 16) représentent des plages d'un quart de la largeur (W) de la surface de la bande de roulement dans la direction de la largeur du bandage pneumatique, agencées au niveau de chaque côté externe de la partie centrale de la bande de roulement (14), dans la direction de la largeur du bandage pneumatique.
